# EUROPEAN PATENT SPECIFICATION

(11) **EP 1 177 686 B1**
(45) Date of publication and mention of the grant of the patent: **29.06.2011**
(21) Application number: 00930185.4
(22) Date of filing: 28.04.2000
(51) Int. Cl.: H04N 5/445, H04N 7/173, H04N 7/088

(54) **ADVERTISEMENT SELECTION BASED ON USER ACTION IN AN ELECTRONIC PROGRAM GUIDE**
WERBUNGSAUSWAHL AUF BASIS VON BENUTZERAKTION IN EINER ELEKTRONISCHEN PROGRAMMFÜHRUNG
SELECTION DE PUBLICITES DANS UN GUIDE DE PROGRAMMES ELECTRONIQUE PAR ACTION D'UN UTILISATEUR

(30) Priority: 30.04.1999 US 131885 P
(43) Date of publication of application: 06.02.2002
(60) Divisional application: 08165415.4
(73) Proprietor: Thomson Licensing, 92130 Issy-les-Moulineaux (FR)
(72) Inventor: SIMPSON, Wanda, Green, Indianapolis, IN 46278 (US); JOHNSON, Michael, Wayne, Indianapolis, IN 46236 (US)
(74) Representative: Kohrs, Martin
(86) International application number: PCT/US2000/011373
(87) International publication number: WO 2000/067473

(56) References cited:
- WO-A-94/13107
- WO-A-98/00975
- WO-A-99/29109
- US-A- 4 888 638
- US-A- 5 559 548
- US-A- 5 600 364
- US-A- 5 623 613
- US-A- 5 710 601
- US-A- 5 838 314
- US-A- 5 880 768

## Description

### FIELD OF INVENTION

The present invention generally relates to the field of electronic program guide processing and display, and more particularly, to a system and method of automatically displaying a targeted advertisement while a user is navigating within an electronic program guide.

### BACKGROUND OF INVENITON

Electronic devices such as televisions or VCRs require a control system that includes a user interface system. Typically, a user interface system provides information to a user and simplifies use of the device. One example of a user interface is an electronic menuing system in a television system. The menuing system allows a user to easily interact with and control a television system that is becoming more complex.

An example of a menuing system which allows user to navigate in today's television environment where there are many channels is an Electronic Program Guide (EPG). EPGs are very useful for providing program information while a consumer is watching TV. These EPGs are generally supported by advertising displayed along with the program information. These advertisements are sent as part of the EPG data and are displayed in a program guide screen based on time descriptors in the advertisement. These time descriptors are used by the receiver to control when the advertisement is made visible in the guide display.

In addition, WO 98/00975 describes a system which allows a user to select hypertext linked still images to display the still images on the television screen. Also, U.S. Pat. No. 5,710,601 describes a system that in response to a user selecting a program within an electronic program guide will play a short video clip of that selected program. These systems clearly require a user to select the information in order for that information to be displayed.

The document US-A-5 623 613 discloses a system for displaying programming information, wherein a user can select a category from a category display area, then select a sub-category of the selected category from a sub-category display area, and then select a program of the selected sub-category from a program display area. Once a program in the program display area is highlighted, the program summary of that selected program will be displayed in a summary panel area.

### SUMMARY OF THE INVENTION

The present inventors recognized that the above method provides for poor control of advertisement exposure. It is the responsibility of the distribution system to define, using time descriptors, when an ad is to be displayed, without knowing any habit of the viewers. Furthermore, the time descriptors will not allow the presentation of the ads to be synchronized with the consumer's navigation within a program guide display.

The present inventors recognize that, therefore, it is desirable to be able to selectively show a targeted advertisement when a user is using an EPG in order to increase ad effectiveness.

The invention is as set out in the attached claims.

### BRIEF DESCRIPTION OF THE DRAWING

In the drawing:
Figure 1 shows an exemplary architecture of a television system of the present invention.
Figure 2 shows an exemplary manner in which auxiliary information may be displayed with the program content associated with a television signal.
Figure 3 shows an exemplary manner in which auxiliary information may be displayed with an electronic program guide.
Figure 4 shows an exemplary flow diagram according to the present invention.
Figure 5 is also an exemplary flow diagram according to the present invention.

### DETAILED DESCRIPTION

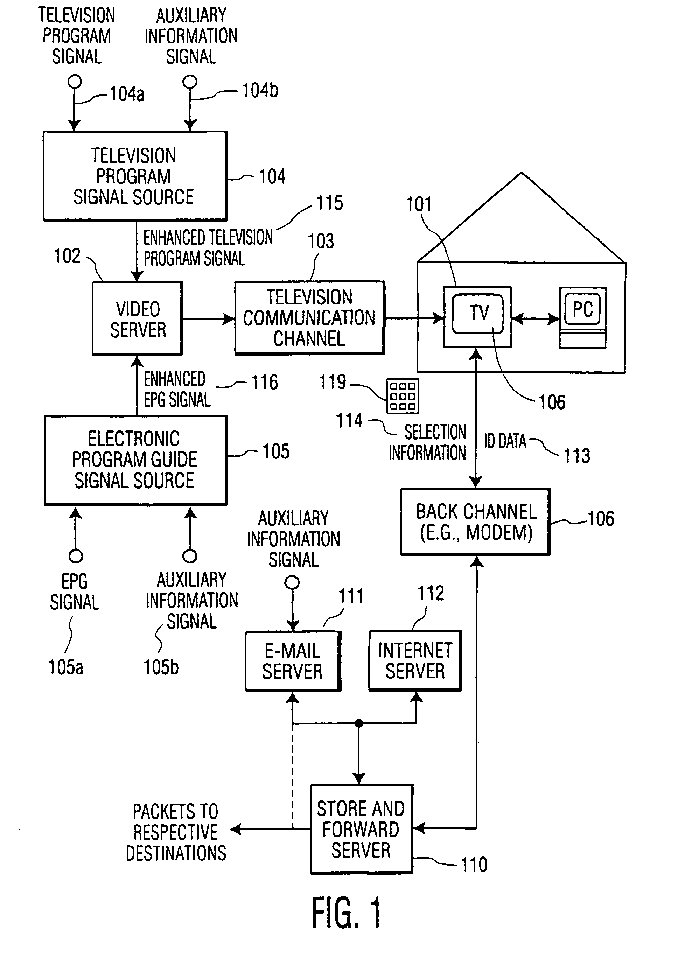

An exemplary embodiment of the present invention is shown in Fig. 1. The system comprises a video processing apparatus 101 capable of communicating television program signals and electronic program guide (EPG) signals each enhanced with auxiliary information, such as advertisements, by a television communication channel 103 such as terrestrial broadcast, cable distribution, satellite broadcast or the like. An example of such a video processing apparatus may be a satellite receiver set-top box, similar to that designed and manufactured by Thomson Consumer Electronics, of Indianapolis, Indiana, U.S.A., for receiving DirecTV™ satellite service provided by Hughes Electronics, and is described in detail, for example, in a PCT application bearing International Publication Number WO 98/56173.

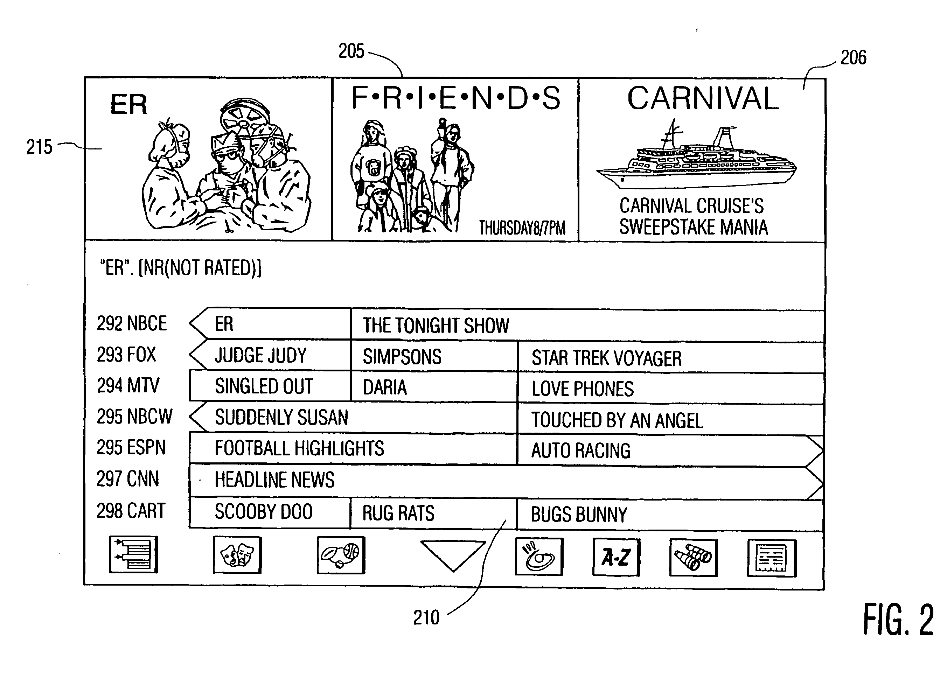

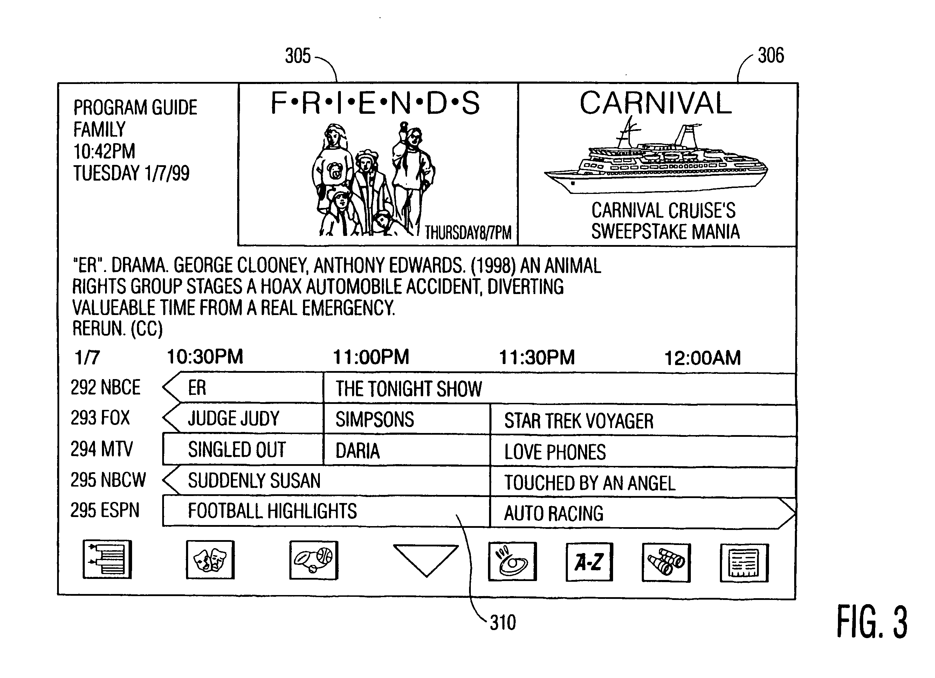

The system shown in Fig. 1 receives the enhanced television program and EPG signals via a video server 102, which combines signal sources representing both television program signal source 104 and electronic program guide signal source 105. The television receiver 101 displays the auxiliary information on a monitor 106 connected to the television receiver 101 in association with the displayed video portion corresponding to a selected television program signal and the displayed EPG derived from the EPG signal. Figure 2 shows the manner in which auxiliary information may be displayed with the program content associated with a television signal; and Figure 3 shows the manner in which auxiliary information may be displayed with an electronic program guide.

When the auxiliary information such as advertisement is selected by a user via a control system of a television receiver such as a remote control system119, the system communicates information concerning the selection from the television receiver via a back channel such as a modem 106, to a "store and forward" server 110.

The store and forward server 110 collects and categorizes the selection information 114 from receiver 101 into packages related to the origin of the auxiliary information, and at a later time communicates the selected information back to a designated party, such as the originator of the auxiliary information. The time delay allows for the selection of the transmission times (e.g., at night) to minimize costs. The server 110 also determines the signal source associated with the selected auxiliary information (i.e., the source of the television signal or the EPG signal) and the number of times the auxiliary information has been selected. The number is used by the operator of the server to determine a fee to be paid, e.g., by the originator of the auxiliary information. This information may also be used to selectively determine the type of auxiliary information to be transmitted to or displayed for the user.

The selection information 114 communicated to the store and forward server from a television receiver may include identification data 113 for identifying the television receiver 101 from which the selection information 114 was sent. Such a provision allows the originator of the auxiliary information to identify and communicate with the consumers making the selection for the purposes of providing additional information and making sales. In a related feature, the provision of identifying the television receiver through the back channel may allow an audience survey company to monitor the viewing habits of the consumers.

Various signal formats for embedding the auxiliary information in the television program signals and EPG signals are available. For example, a protocol known as ATVEF proposed by the Advance Television Enhancement Forum, an alliance of television communication and computer companies is advantageous. The protocol is based on the HTML (Hypertext Markup Language) utilized in the Internet. The ATVEF protocol may be used with both analog and digital television systems. Other protocols may be used. In an analog television system, the auxiliary information may be included in the vertical blanking interval (VBI) of the television program signal, together with the EPG signal. In a digital television system the auxiliary information may be "packetized" and inserted into the digital data stream including the television program data and EPG data.

Another tier or feature level of the television system may also include provisions for communicating E-mail information, e.g., via the store and forward sever, also enhanced with auxiliary information, such as advertisements, to television receivers. In that case, the store and forward server also collects and categorizes the selection information associated with e-mail and quantifies the selection information for revenue tracking purposes. In this tier, providing auxiliary information, such as advertisements, subsidizes the cost of the E-mail service and may, in fact, allow for "free-mail". However, since the server delays the transmission of data so as to be economic, still other tiers of the system may provide for accelerated E-mail communication service and possibly also connection to the Internet upon the payment of fees by the consumer. Such an e-mail server 111 and Internet server 112 are shown in Fig. 1.

The auxiliary information may also contain software for operating the television receiver or for providing an additional functionality to it, such as video games or personal computer functions including, e.g., word processing and spread sheet programs. To the extent that the television receiver itself has insufficient data processing capability itself, e.g., insufficient memory, such data processing may be shared from a personal computer linked to the television receiver via a bus.

Another aspect of such an apparatus provides for integrating a web browser and either an Ethernet or HomePNA interface for networking. Connecting the apparatus to a personal computer (PC) enhances the functionality by being able to download software applications, such as a word processor or spreadsheet, from the PC. Further, the apparatus could utilize the PC for data storage or for printing. A network connection would enable storing a URL directly and/or automatically on the PC.

In Figure 1, a television program signal source 104 combines a television program signal 104a with an auxiliary information signal 104b, such as an advertisement, to produce an enhanced television program signal 115 that is supplied to the video server 102. Also supplied to the server is an enhanced electronic program guide (EPG) signal from an electronic program guide signal source. The enhanced EPG signal represents a combination of an EPG signal 116 representative of program guide information 105a and a second auxiliary information signal 105b, such as an advertisement. Thus, auxiliary information such as advertisements may be included with either or both of the video and EPG signals.

The video server 102 communicates a signal comprising the enhanced television signal and/or the enhanced EPG signal to a video signal processing device, such as TV receiver 101, via a television communication channel. As described above, a back channel from the video signal processing device, e.g., TV, is provided via means of a device such as a modem 106. The back channel couples the video signal processing device 101 to a store and forward server 110 where data is stored and processed before being forwarded to other destinations. For example, packets of data may be forwarded to advertisers or others communicating auxiliary information to a viewer. The store and forward server 110 also provides a link between the email server 111 and internet server 112 that provide respective email and internet connection services to users in accordance with the tier of service to which the user subscribes. An auxiliary information signal may also be coupled to the system via the email server 111.

In FIG. 2, auxiliary information, such as advertisements for the television program "Friends" 205 and for Carnival Cruise Lines 206, is shown displayed with EPG information 210 and with video program information 215 such as the television program "ER". The video program window 215 could be larger or smaller as could the display regions associated with the auxiliary information 205 or 206 and the EPG information 215. Also, three types of display regions are shown simultaneously in FIG. 2 (i.e., video or television program, auxiliary information, and EPG regions), a display might include only one or only two of the three regions. For example, FIG. 3 shows auxiliary information, such as advertisements 305 and 306 displayed with EPG information 310 and without video or television program information.

As discussed above, program guide information are being provided to set-top boxes and televisions in satellite, cable, terrestrial, etc. systems to include, for example, advertisements. These advertisements may either be hard-coded into the receiving unit's software, or they are downloaded via the auxiliary signal distribution system.

As mentioned previously, current systems display advertisements in a program guide screen based on time descriptors in the advertisement. These time descriptors are used by the receiver to control when the advertisement is made visible in the guide display. This method provides for poor control of advertisement exposure. It is the responsibility of the distribution system to define, using time descriptors, when an ad is to be displayed, without knowing any habit of the viewers. Furthermore, the time descriptors will not allow the presentation of the ads to be synchronized with the consumer's navigation within a program guide display.

In accordance with the present invention, the present inventors recognize that a consumer navigating through a program guide display, his or her focus changes from one program to another. Therefore, the guide advertisements should be adjusts accordingly, to achieve the maximum results. If the consumer is attracted by the advertisement, he or she is only one or two button presses from viewing the advertised program.

The present method of channel and time specific advertisement placement can be done using information being displayed in the program guide screen as well as new descriptors in the advertisement's data. The channel numbers of the channels being displayed in the guide along with new descriptors in the advertisement's data such as a Channel Id and/or Program Id, can be used to present a channel/program-specific advertisement. This allows for the following. When the consumer scrolls through a program guide display and highlights or is about to highlight a program on a channel, a catchy advertisement specific to that program can be started which will lure the consumer to tune to that program.

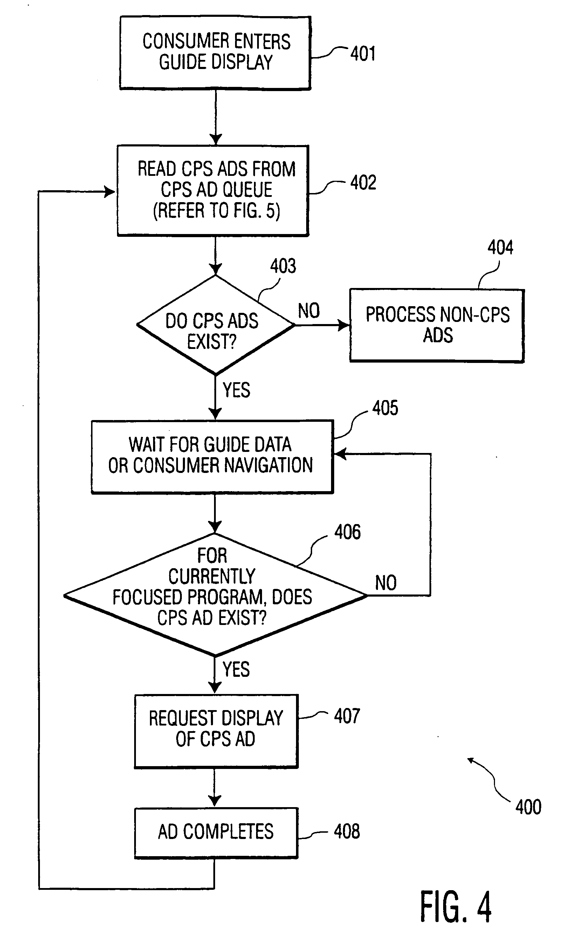

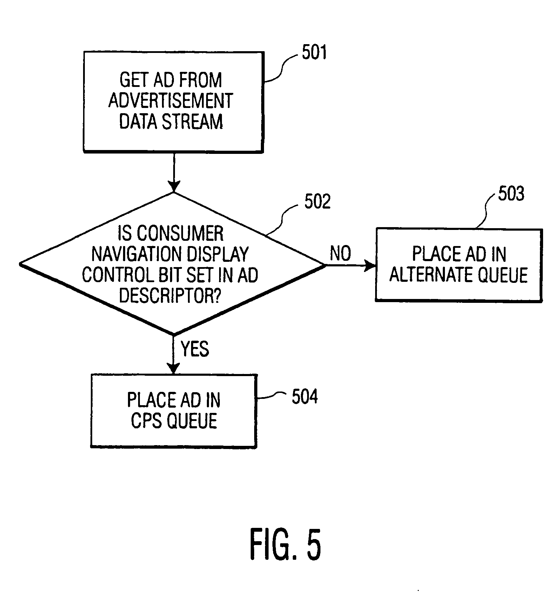

The placement of a particular advertisement in the program guide according to the present invention, may be controlled as shown, for example, in the flow chart of Fig. 4 and described in detail below. As shown in Fig. 4, when the consumer displays the program guide as shown in step 401, a software process called, for example, Advertisement Manager 400, queries the Channel and Program Specific (CPS) advertisement queue, as in step 402. This queue is maintained by a separate process as shown in Fig. 5.

The Channel and Program Specific advertisement queue process shown in Fig. 5 will obtain advertisement information from advertisement data sent as the auxiliary information signal of the enhanced television program signal 104 or electronic program guide signal source 105, as shown in step 501. In step 502, a determination is made to see whether a particular advertisement received is subject to be displayed based on consumer navigation. This is done by looking at, for example, a control bit in the advertisement data. If the determination is affirmative, as in step 504, this particular advertisement will be placed in the CPS queue to be used by Advertisement Manager 400 as described below.

Continue on step 403 of Fig. 4, the Advertisement Manager 400 check to see if CPS advertisements exist from the CPS queue. The Advertisement Manager 400 then wait for some type of consumer navigation, in step 405. This can be done, for example, by monitor the highlight position of a cruiser or user key entries on the remote. It then checks the channel and program information of each ad and compares it to the channels and programs being highlighted in the guide screen, in step 406. This is done, for example, when the guide display is scrolled or paged with respect to time or channels or when new guide data is presented on the screen. If the channel descriptor of an ad matches one of the channels being displayed or very shortly about to be displayed, determined by monitoring the direction of scroll within the guide, the Advertisement Manager 400 compares the program descriptor of the ad with the program being displayed in the guide. If the channel and program information correspond, the ad is displayed, as in steps 406 and 407. Otherwise, the Advertisement Manager 400 continues to monitor the CPS ad queue and/or display non-CPS ads, as in steps 402, 403 and 404.

It will be readily apparent to those skilled in the art that the teachings of the present invention described above may be applied to a television, VCR, settop boxes, a video storage and playback unit such as a Tivo, etc., without departing from the true scope of the claims appended hereto.

## Claims

1. Method of displaying on a receiver device a targeted advertisement automatically along with an electronic program guide based on navigation by a user, **characterised in that** it comprises the steps performed on this receiver device:
receiving a plurality of advertisements for display with the electronic program guide (501);
identifying which advertisements are targeted advertisements for automatic display during navigation of the electronic program guide (502);
storing each of the received advertisements along with a respective descriptor (503, 504), this descriptor associating the identified received advertisement with a channel or a program;
monitoring navigation by the user of the electronic program guide to identify a highlighted position (405); and
if an identified targeted advertisement matches a channel or program associated with said highlighted position (405), displaying said identified targeted advertisement; and
if no identified targeted advertisement matches a channel or program associated with said highlighted position (406), displaying a non-targeted advertisement and repeating from said navigation monitoring step (405).

2. The method of claim 1 wherein the respective descriptor comprises a channel descriptor.

3. The method of claim 2 wherein the channel specified in the descriptor of the displayed targeted advertisement in the displaying step matches the channel associated with the highlighted position.

## Patentansprüche

1. Verfahren zum Anzeigen einer gezielten Werbung automatisch zusammen mit einer elektronischen Programmführung auf der Grundlage der Navigation durch einen Nutzer auf einer Empfängervorrichtung, **dadurch gekennzeichnet, dass** das Verfahren die folgenden schritte umfasst, die in dieser Empfängervorrichturig ausgeführt werden:
Empfangen mehrerer Werbungen zur Anzeige mit der elektronischen Programmführung (501);
Identifizieren, welche Werbungen gezielte Werbungen zur automatischen Anzeige während der Navigation der elektronischen Programmführung (502) sind;
Speichern jeder der empfangenen Werbungen zusammen mit einem jeweiligen Deskriptor (503, 504), wobei dieser Deskriptor die identifizierte empfangene Werbung einem Kanal oder einem Programm zuordnet;
überwachten der Navigation der elektronischen Programmführung durch den Nutzer zum Identifizieren einer hervorgehobenen Position (405); und
falls eine identifizierte gezielte Werbung zu einem der hervorgehobenen Position (405) zugeordneten Kanal oder Programm passt, Anzeigen der identifizierten gezielten Werbung; und
falls keine identifizierte gezielte Werbung zu einem der hervorgehobenen Position (406) zugeordneten Kanal oder
Programm passt, Anzeigen einer ungezielten Werbung und Wiederholen von dem Navigationsüberwachungsschritt (405).

2. Verfahren nach Anspruch 1, bei dem der jeweilige Deskriptor einen Kanaldeskriptor umfasst.

3. Verfahren nach Anspruch 2, bei dem der in dem Deskriptor der in dem Anzeigeschritt angezeigten gezielten Werbung spezifizierte Kanal zu dem Kanal passt, der der hervorgehobenen Position zugeordnet ist.

## Revendications

1. Procédé d"affichage sur un dispositif récepteur d'une publicité ciblée, accompagnant automatiquement avec un guide de programmes électronique reposant sur la navigation d'un utilisateur, **caractérisé en ce qu'**il comprend les étapes effectuées sur ce dispositif récepteur :
réception d'une pluralité de publicités pour l'affichage avec le guide de programmes électronique (501);
identification des publicités étant des publicités ciblées pour l'affichage automatique durant la navigation dans le guide de programmes électronique (502);
stockage de chacune des publicités reçues avec un descripteur respectif (503, 504), ce descripteur associant les publicités reçues identifiées à un canal ou un programme;
contrôle de la navigation par l'utilisateur du guide de programmes électronique pour identifier une position mise en surbrillance (405) et
si une publicité ciblée identifiée correspond à un canal ou à un programme associé à ladite position mise en surbrillance (405), affichage de ladite publicité ciblée identifiée, et
si aucune publicité ciblée identifiée ne correspond à un canal ou à un programme associé à ladite position mise en surbrillance (406), affichage d'une publicité non ciblée et la répétition de ladite étape de contrôle de navigation (405).

2. Procédé selon la revendication 1 où le descripteur respectif comprend un descripteur de canal.

3. Procédé selon la revendication 2 où le canal spécifié dans le descripteur de la publicité ciblée affichée lors de l'étape d'affichage correspond au canal associé à la position mise en surbrillance.
